# EUROPEAN PATENT SPECIFICATION

(11) **EP 2 754 960 B1**
(45) Date of publication and mention of the grant of the patent: **06.03.2019**
(21) Application number: 12830586.9
(22) Date of filing: 30.08.2012
(51) Int. Cl.: F23G 5/30, B09B 3/00, F23C 10/14, F27B 15/02

(54) **FLUIDIZED BED FURNACE AND WASTE DISPOSAL METHOD USING FLUIDIZED BED FURNACE**
WIRBELSCHICHTOFEN UND ABFALLENTSORGUNGSVERFAHREN MIT DEM WIRBELSCHICHTOFEN
FOUR À LIT FLUIDISÉ ET PROCÉDÉ D'ÉLIMINATION DE DÉCHETS UTILISANT UN FOUR À LIT FLUIDISÉ

(30) Priority: 07.09.2011 JP 2011195283
(43) Date of publication of application: 16.07.2014
(73) Proprietor: Ebara Environmental Plant Co., Ltd., Tokyo 144-0042 (JP)
(72) Inventor: YAMAGUCHI, Shigeru, Tokyo 144-0042 (JP); IMAMURA, Kohki, Tokyo 144-0042 (JP); ISHIKAWA, Ryuichi, Tokyo 144-0042 (JP); KIRA, Makoto, Tokyo 144-0042 (JP); NAKAMURA, Yukihiro, Tokyo 144-0042 (JP); IKEDA, Futoshi, Tokyo 144-0042 (JP)
(74) Representative: Schmidbauer, Andreas Konrad
(86) International application number: PCT/JP2012/071964
(87) International publication number: WO 2013/035615

(56) References cited:
- EP-A1- 0 766 041
- CH-A- 440 527
- JP-A- S6 117 808
- JP-B2- 3 877 361
- JP-B2- H0 735 883
- US-A- 5 422 080

## Description

### Technical Field

The present invention relates to a fluidized bed furnace for treating wastes, and more particularly to a fluidized bed furnace which is capable of treating wastes continuously and stably even if the wastes vary in quality and quantity, by drying and pyrolyzing the wastes slowly. Further, the present invention relates to a method for treating wastes using such fluidized bed furnace.

### Background Art

A fluidized bed furnace is used in the field of waste treatment as an apparatus for performing a thermal reaction with an object to be treated in a fluidized bed. The fluidized bed furnace is configured to dry, pyrolyze and combust wastes in a short period of time by utilizing large thermal capacity of a fluidized medium (sand or the like) and supplying wastes into the fluidized medium heated to a high temperature. The fluidized bed furnace is used for an incinerator and a gasification furnace. The fluidized bed furnace has characteristics that a heat-transfer coefficient from the fluidized medium to the object to be treated is high so that the object to be treated is instantaneously heated by the fluidized medium heated to a high temperature, and the reaction proceeds sufficiently within a short period of time, and that incineration residues are clean as they contain no unburned matter, and metals can be easily recovered from the residues.

In order to make full use of the above characteristics, the conventional fluidized bed furnaces are designed to keep a good fluidizing state of the fluidized medium in the entire fluidized bed, thereby eliminating any regions suffering poor fluidization, for the purpose of causing a reaction through the effective use of the entire fluidized bed.

However, as disclosed in JP 57-166 411 A, it is known that a poorly fluidized area inevitably occurs depending on the shape of a furnace bed in a specific region such as an outer peripheral bottom region of the fluidized bed. Since incombustibles are liable to be deposited in such a poorly fluidized area, in some cases, the fluidized bed furnace cannot perform incineration treatment (or gasification treatment) continuously. Therefore, as disclosed in JP 1-203814 A, attempts have been made to prevent a fluidized medium from becoming stagnant by providing an inclined wall around the bottom of the furnace, inclined surface blow nozzles along an inclined bottom surface of the bottom of the furnace, and lateral blow nozzles on side walls confronting each other across drain channels in the bottom of the furnace.

Furthermore, reference is made to CH 440 527, which relates to a fluidized bed furnace for sewage sludge, wherein combustion of the material takes place outside of the fluidized bed, which serves mainly as a drying and processing zone. In particular, the sewage sludge after dehydration is carried out of a fluidized bed of the fluidized bed furnace by air, which is blown into the material to form the fluidized bed. The sewage sludge after dehydration is discharged from the fluidized bed in the form of dust and burns above the fluidized bed.

The fluidized bed features concentric zones which are individually controlled by corresponding valves depending on the required capacity. The center zone is always active and receives the highest amount of fluidizing air and is thereby fluidized most violently. The sewage sludge is charged into the center zone.

### Summary of Invention

### Technical Problem

As described above, in the conventional fluidized bed furnace, various attempts have been made to keep a good fluidizing state of the fluidized medium in the entire fluidized bed, thereby eliminating any regions suffering poor fluidization.

The present inventors have focused attention on the fact that incineration treatment of the wastes can be stably performed even if the supplied wastes vary in quality and quantity, by drying and pyrolyzing the wastes slowly, in order to overcome the following drawbacks: When the wastes such as municipal wastes that are non-uniform in quality and quantity are treated in the fluidized bed furnace, since the heat-transfer coefficient is high to allow a reaction to proceed within a short period of time in the fluidized bed furnace, it is difficult to maintain optimum combustion conditions according to fluctuations in quality and quantity of the supplied wastes. Thus, the present inventors have conceived the formation of a bed, in a fluidized bed furnace, which has a function to allow a reaction such as drying and pyrolysis to proceed slowly with time, and have made the present invention.

It is therefore an object of the present invention to provide a fluidized bed furnace in which a fixed-bed having a fluidized medium kept in a resting state is formed adjacent to a fluidized-bed, and wastes are moved together with the fluidized medium onto the upper surface of the fixed-bed by utilizing a splashing action of the fluidized medium in an upper portion of the fluidized-bed, thereby allowing a reaction such as drying and pyrolysis of the wastes to proceed slowly with time, and thus the wastes can be dried and pyrolyzed slowly in the entire furnace.

Further, another object of the present invention is to provide a method for treating wastes using the above fluidized bed furnace.

### Solution to Problem

In order to achieve the above object, according to the present invention, there is provided a fluidized bed furnace and a method for treating wastes, as set forth in claims 1 and 5, respectively. The fluidized bed furnace comprises a cylindrical furnace body whose horizontal section is substantially rectangular or circular a base plate disposed at a bottom portion of the furnace body and having gas supply ports for supplying a fluidizing gas to fluidize a fluidized medium; and a fluidized bed formed on the base plate in the furnace body to take the wastes into the fluidized medium and pyrolyze the wastes wherein the fluidized bed has a fixed-bed where the fluidized medium is kept in a resting state, the fixed-bed being formed at a furnace wall side of the furnace body; and a fluidized-bed where the fluidized medium is fluidized, the fluidized bed being located away from the furnace wall of the furnace body and adjacent to the fixed-bed; and an upper surface of the fixed-bed is formed by an inclined surface formed by the fluidized medium which has been scattered from the fluidized-bed.

According to the present invention, by forming the fixed-bed adjacent to the fluidized-bed in the fluidized furnace, wastes are taken into the fluidized-bed and dried and pyrolyzed in the fluidized-bed, and the fluidized medium scattered from the fluidized-bed due to a splashing action of the fluidized medium of the fluidized-bed is supplied onto the fixed-bed. The fluidized medium that is supplied onto the fixed-bed forms a certain slope and slides down, thus forming a so-called angle of repose. A part of wastes are sprinkled together with the fluidized medium onto the upper surface of the fixed-bed and slide down along the slope, i.e., performing a so-called tumbling action, and thus drying and pyrolysis of the wastes proceeds slowly. In this manner, the wastes are moved together with the fluidized medium onto the fixed-bed by utilizing a splashing action of the fluidized medium in an upper portion of the fluidized-bed, thereby allowing a reaction such as drying and pyrolysis of the wastes to proceed slowly with time, and thus the wastes can be dried and pyrolyzed slowly in the entire furnace.

In a preferred aspect of the present invention, the fixed-bed is formed without supplying the fluidizing gas or is formed by supplying the fluidizing gas within a range for allowing the fluidized medium to form a fixed-bed.

According to the present invention, part of the gas supply ports of the base plate are closed so as not to supply the fluidizing gas to a certain region above the base plate, and thus the fixed-bed can be formed in this region. Further, the gas supply ports are not closed, but are adjusted to reduce the diameters of the holes of the gas supply ports so as to supply a small flow rate of fluidizing gas into the furnace within the range to maintain a fixed-bed where the fluidized medium is not moved or fluidized, thereby forming the fixed-bed.

In a preferred aspect of the present invention, a supply amount of the fluidizing gas ejected from the gas supply ports of the base plate is differentiated in areas of the fluidized bed to make a fluidizing velocity larger in at least one area of the areas than in another area so that a moving-bed where the fluidized medium descends is formed in the another area and a fluidized-bed where the fluidized medium ascends is formed in the at least one area, and the wastes are supplied into the moving-bed.

According to the present invention, the wastes supplied to the moving-bed are swallowed by the moving-bed and moved downwardly together with the fluidized medium. At this time, the wastes are dried and pyrolyzed by the heat of the fluidized medium, and water content in the wastes is evaporated and a combustible gas is generated from the combustible content in the wastes, thus becoming a brittle pyrolysis residue. The pyrolysis residue typically contains the incombustibles and the unburned matter which becomes brittle by the pyrolysis. When the pyrolysis residue that is generated in the moving-bed moves with the fluidized medium and reaches the base plate, the pyrolysis residue is directed along the slanted base plate toward the bottom of the fluidized-bed. When the pyrolysis residue reaches the fluidized-bed, the unburned matter is separated from the incombustibles by the fluidizing air, and the remaining incombustibles from which the unburned matter has been separated is directed together with part of the fluidized medium toward the incombustible discharge port. In the fluidized-bed, since the temperature of the fluidized medium gradually rises by combustion of the unburned matter, the temperature of the fluidized-bed increases proportionally from the lower part to the upper part. Then, part of the wastes supplied into the fluidized bed furnace are supplied together with the fluidized medium onto the upper surface of the fixed-bed by the splashing action of the fluidized medium in the upper parts of the fluidized-bed and the moving-bed. Part of the wastes slide down along the inclined surface of the upper surface of the fixed-bed, i.e., a so-called tumbling action is performed, and thus drying and pyrolysis of the wastes proceeds slowly, and the wastes are swallowed into the moving-bed.

In a preferred aspect of the present invention, a circulating flow for circulating the fluidized medium between the moving-bed and the fluidized-bed is formed in the at least one area and the another area.

In a preferred aspect of the present invention, the fixed-bed is formed on one side of the moving-bed and the fluidized-bed or is formed on both sides of the moving-bed and the fluidized-bed.

According to the present invention, since the fixed-bed is formed adjacent to the moving-bed and the fluidized-bed, by providing the deflector which facilitates the reversal of the fluidized medium from the upper portion of the fluidized-bed to the upper portion of the moving-bed, the upper surface of the fluidized bed has a reduced area due to contraction by the deflector. Therefore, explosive fracture of air bubbles on the surface of the fluidized bed occurs relatively actively also in the upper portion of the moving-bed, and the fluidized medium also flies together with part of the wastes onto the upper portion of the fixed-bed formed adjacent to the moving-bed, and drying and gasification of part of the wastes proceeds by the mild tumbling action. The fluidized medium that has flowed into the moving-bed accepts the supplied wastes again, and repeats the thermal reactions in the moving-bed and the fluidized-bed.

In a preferred aspect of the present invention, the fluidized-bed is a bubbling fluidized-bed where the fluidized medium repeats an up-and -down motion, and the wastes are supplied into the bubbling fluidized-bed.

According to the present invention, the fluidized medium scattered from the bubbling fluidized-bed due to a splashing action of the fluidized medium of the bubbling fluidized-bed is supplied onto the fixed-bed. The fluidized medium that has been supplied onto the fixed-bed forms a certain slope and slides down, thus forming a so-called angle of repose. A part of wastes are sprinkled together with the fluidized medium onto the upper surface of the fixed-bed, and slide down along the slope, i.e., performing a so-called tumbling action, and thus drying and pyrolysis of the wastes proceeds slowly.

In a preferred aspect of the present invention, the fixed-bed is formed so as to surround the bubbling fluidized-bed.

According to the present invention, since the fixed-bed is formed so as to surround the bubbling fluidized-bed, the fixed-bed having a large area can be ensured. Therefore, part of wastes can be scattered over the upper surface of the fixed-bed having a large area by a splashing action of the fluidized medium of the bubbling fluidized-bed, and a relatively large amount of wastes that have been scattered on the upper surface of the fixed-bed having a large area can be dried and pyrolyzed over time.

According to the present invention, there is provided a treating method for treating wastes comprising: supplying the wastes to a fluidized bed furnace in which a fixed-bed where a fluidized medium is kept in a resting state is formed in a fluidized bed, the fixed-bed being located adjacent to a fluidized-bed; and repeating a tumbling action to cause the wastes to slide down together with the fluidized medium along a certain inclination formed by the fluidized medium at an upper portion of the fixed-bed and to supply the wastes onto the upper portion of the fixed-bed again by a splashing effect of the fluidized medium, thereby drying and pyrolyzing the wastes slowly.

According to the present invention, the wastes are sprinkled together with the fluidized medium onto the upper surface of the fixed-bed, and slide down along the slope, i.e., a so-called tumbling action is performed, and thus drying and pyrolysis of the wastes proceeds slowly.

### Advantageous Effects of Invention

According to the present invention, a fixed-bed having a fluidized medium kept in a resting state is formed adjacent to a fluidized-bed in a fluidized bed furnace, and wastes are supplied together with the fluidized medium onto the upper surface of the fixed-bed by utilizing a splashing action of the fluidized medium in an upper portion of the fluidized-bed, thereby allowing a reaction such as drying and pyrolysis of the wastes to proceed slowly with time, and thus the wastes can be dried and pyrolyzed slowly in the entire furnace. Therefore, the wastes can be treated continuously and stably even if the wastes vary in quality and quantity.

### Brief Description of Drawings

FIG. 1 is a schematic vertical cross-sectional view of an overall structure of a fluidized bed furnace according to the present invention;
FIG. 2 is a perspective view showing a structure of a base plate provided at the bottom of a furnace body;
FIG. 3 is a plan view of a fluidized bed having the base plate with gas diffusion nozzles, constructed as shown in FIG. 2;
FIG. 4 is a cross-sectional view of the fluidized bed taken along line IV - IV of FIG. 3;
FIG. 5A is a schematic plan view showing one aspect of a fluidized bed furnace according to the present invention;
FIG. 5B is a schematic plan view showing one aspect of a fluidized bed furnace according to the present invention;
FIG. 5C is a schematic plan view showing one aspect of a fluidized bed furnace according to the present invention;
FIG. 5D is a schematic plan view showing one aspect of a fluidized bed furnace according to the present invention;
FIG. 6A is a schematic plan view showing an example of a bubbling-type fluidized bed furnace having a fixed-bed formed therein;
FIG. 6B is a schematic vertical cross-sectional view showing an example of the bubbling-type fluidized bed furnace having the fixed-bed formed therein; and
FIG. 6C is a schematic plan view showing an example of a rectangular bubbling-type fluidized bed furnace having a fixed-bed formed therein.

### Description of Embodiments

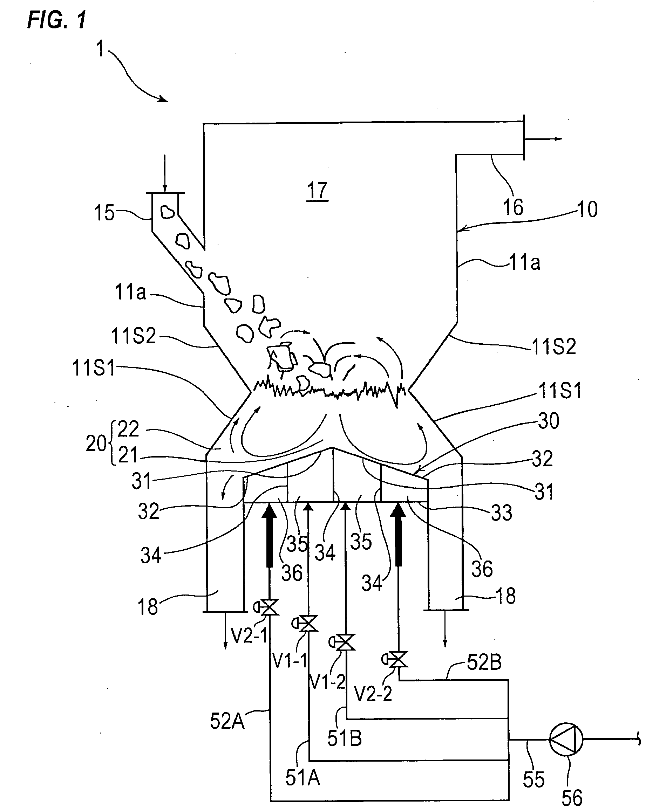

A fluidized bed furnace according to embodiments of the present invention will be described below with reference to FIGS. 1 through 6. In FIGS. 1 through 6, identical or corresponding parts are denoted by identical reference numerals, and will not be described in duplication.

FIG. 1 is a schematic vertical cross-sectional view of an overall structure of a fluidized bed furnace according to the present invention. As shown in FIG. 1, the fluidized bed furnace 1 includes a furnace body 10 for treating wastes, a fluidized bed 20 for causing the wastes introduced therein to react thermally, and a base plate 30 for supporting the fluidized bed 20. The fluidized bed 20 is a bed which is formed by an accumulation of a fluidized medium composed typically of sand such as silica sand. The furnace body 10 comprises a furnace body having a substantially square tubular shape having a substantially rectangular horizontal cross section.

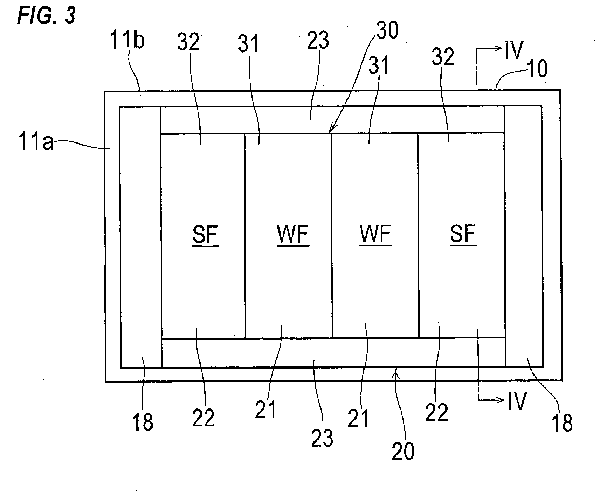

As shown in FIG. 1, the furnace body 10 having a substantially square tubular shape has a pair of side walls 11a, 11a facing each other and having portions that are concave inwardly, and a pair of side walls (11b in FIG. 3) facing each other and connected to the side walls 11a, 11a. Each of the concave portions of the furnace body 10 is formed by a slanted portion 11S1 inclined inwardly of the furnace body 10 from the lower part to the upper part and a slanted portion 11S2 disposed above the slanted portion 11S1 and inclined outwardly of the furnace body 10 from the lower part to the upper part. Each of the slanted portions 11S1 functions as a deflector for allowing an upward flow of the fluidized medium to turn easily toward the interior side of the furnace body 10.

As shown in FIG. 1, one of the side walls 11a has a supply port 15 for supplying an object to be treated (wastes) into the furnace. The other side wall 11a has an exhaust port 16 defined in an upper portion thereof for discharging gases that are generated when the wastes react thermally. A space above the fluidized bed 20 in the furnace body 10 serves as a freeboard 17. In the case where the furnace body 10 serves as an incinerator, a combustion gas produced by combusting a combustible gas with secondary air supplied to the freeboard 17 is discharged from the exhaust port 16. In the case where the furnace body 10 serves as a gasification furnace, a combustible gas is discharged from the exhaust port 16. The supply port 15 is provided in the side wall 11a at the location above the upper end of the slanted portion 11S2, and a chute for guiding the wastes supplied from the supply port 15 is formed to drop the wastes onto the central portion of the fluidized bed 20. The base plate 30, which is installed in the furnace body 10 has a chevron-shaped cross section which is highest at the center and is gradually lowered toward the opposite side edges. Incombustible discharge ports 18, 18 are formed between the opposite side edges of the base plate 30 and the side walls 11a, 11a.

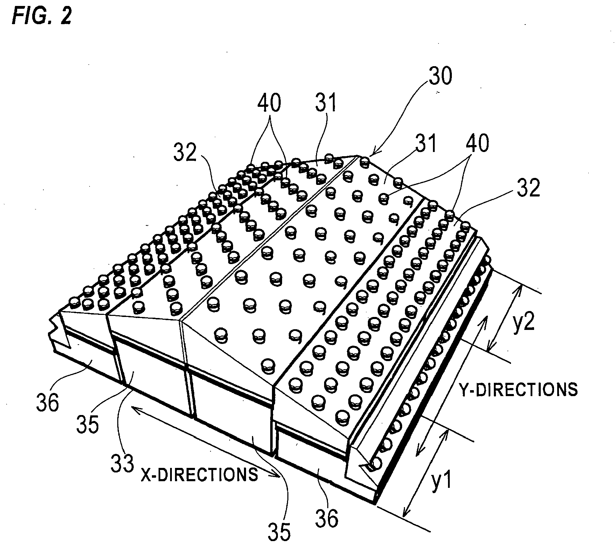

FIG. 2 is a perspective view showing a structure of the base plate 30 provided at the bottom of the furnace body 10. In FIG. 2, a width direction of the base plate 30 will be described as X direction, whereas a depth direction of the base plate 30 will be described as Y direction. As shown in FIG. 2, the base plate 30 is highest at the center in the X direction, and has descending slopes that are progressively lower toward the opposite side edges. The base plate 30 is not slanted, but is flat in the Y direction. The base plate 30 has a number of gas diffusion nozzles 40 for ejecting fluidizing air as a fluidizing gas into the furnace. The air diffusion nozzles 40 constitute gas supply ports for supplying the fluidizing air as the fluidizing gas into the furnace to fluidize the fluidized medium.

As shown in FIGS. 1 and 2, a bottom plate 33 is provided below the base plate 30 and spaced from the base plate 30. A space between the base plate 30 and the bottom plate 33 is divided into four spaces by three partition plates 34 that extend from the base plate 30 to the bottom plate 33. Since the space between the base plate 30 and the bottom plate 33 is divided by the three partition plates 34, two central air chambers 35, 35 and two side air chambers 36, 36 are formed below the base plate 30. In order to distinguish the two base plates for forming the two central air chambers 35, 35 and the two base plates for forming the two side air chambers 36, 36 in FIGS. 1 and 2, the base plates for the air chambers 35, 35 are referred to as base plates 31, 31 and the base plates for the air chambers 36, 36 are referred to as base plates 32, 32.

As shown in FIG. 1, air pipes 51A, 51B, 52A, 52B are connected to the four air chambers 35, 35, 36, 36 respectively to supply the fluidizing air from outside of the furnace. The air pipes 51A, 51B, 52A, 52B have respective regulating valves V1-1, V1-2, V2-1, V2-2 for regulating the flow rate of air that flows in the air pipes 51A, 51B, 52A, 52B. The four air pipes 51A, 51B, 52A, 52B have upstream ends joined together into a single air pipe 55, and an air blower 56 for delivering fluidizing air under pressure is provided in the air pipe 55. The four air pipes 51A, 51B, 52A, 52B may alternatively have respective air blowers.

As shown in FIG. 2, of the air diffusion nozzles 40 provided on the base plate 30, air diffusion nozzles 40 which are positioned in predetermined ranges y1, y2 from the opposite ends of the base plate 30 in the Y direction are closed. Specifically, those air diffusion nozzles 40 which are positioned in the predetermined ranges y1, y2 from the opposite ends of the base plates 31, 31 and the base plates 32, 32 which constitute the base plate 30 are closed so as not to supply the fluidizing air as the fluidizing gas into the furnace.

FIG. 3 is a plan view of the fluidized bed 20 having the base plate 30 with the air diffusion nozzles 30, constructed as shown in FIG. 2. In FIG. 3, upper surfaces of fixed-beds 23 are illustrated, and the air diffusion nozzles 40 are omitted from illustration. In the fluidizing air supply system that is arranged as shown in FIG. 1, by adjusting the opening degrees of the regulating valves V1-1, V1-2 to regulate the flow rates of air flowing in the air pipes 51A, 51B, the fluidizing air is ejected from the air diffusion nozzles 40 disposed on the two central base plates 31, 31 so as to give a substantially small fluidizing velocity. As a result, as shown in FIG. 3, weak fluidizing zones WF in which the fluidized medium is fluidized at a relatively low speed are formed on the two central base plates 31, 31. Further, by adjusting the opening degrees of the regulating valves V2-1, V2-2 to regulate the flow rates of air flowing in the air pipes 52A, 52B, the fluidizing air is ejected from the air diffusion nozzles 40 disposed on the two side base plates 32, 32 so as to give a substantially large fluidizing velocity. As a result, as shown in FIG. 3, intense fluidizing zones SF in which the fluidized medium is fluidized actively are formed on the two side base plates 32, 32.

As shown in FIG. 3, since the weak fluidizing zones WF, WF that are formed on the two central base plates 31, 31 and the intense fluidizing zones SF, SF that are formed on the two side base plates 32, 32 are present adjacent to each other, moving-beds 21 in which the fluidized medium moves downwardly at a relatively low speed are formed in the weak fluidizing zones WF, whereas fluidized-beds 22 in which the fluidized medium moves upwardly are formed in the intense fluidizing zones SF. Consequently, as shown in FIG. 1, in the entire region where the weak fluidizing zone WF and the intense fluidizing zone SF are positioned adjacent to each other, the fluidized medium moves from the weak fluidizing zone WF to the intense fluidizing zone SF (from the moving-bed 21 to the fluidized-bed 22) in a lower portion of the entire region, whereas the fluidized medium moves from the intense fluidizing zone SF to the weak fluidizing zone WF (from the fluidized-bed 22 to the moving-bed 21) in an upper portion of the entire region, thus forming right and left circulating flows of the fluidized medium circulating between the weak fluidizing zone WF and the intense fluidizing zone SF (the moving-bed 1 and the fluidized-bed 22).

On the other hand, the air diffusion nozzles 40 which are positioned in the predetermined ranges y1, y2 from both side walls 11b of the base plates 31, 31 and the base plates 32, 32 are closed and do not supply fluidizing air into the furnace. Therefore, the fixed-beds 23 where the fluidized medium is kept in a resting state are formed at both end portions of the base plates 31, 31 and the base plates 32, 32. The air diffusion nozzles 40 which are positioned in the predetermined ranges y1, y2 from both side walls 11b of the base plates 31, 31 and the base plates 32, 32 may not be closed, but may supply an amount of air within a range for allowing the fluidized medium to maintain fixed-beds into the furnace through adjustments to reduce the diameters of the holes of the nozzles, thereby forming the fixed-beds 23. The range y1 (= y2) is set to 300 to 600 mm. If the range y1 (= y2) is smaller than 300 mm, then it may not be possible to form fixed-beds 23 having inclined surfaces (upper surfaces of the fixed-beds) at an angle of repose from the side walls 11b at a position above the upper surface of the fluidized-bed. If the range y1 (= y2) is greater than 600 mm, then the widths of the fixed-beds 23 having inclined surfaces (upper surfaces of the fixed-beds) at an angle of repose from the side walls 11b may be so large that incombustibles are liable to be accumulated on the upper surfaces of the fixed-beds 23 near the side walls 11b.

In FIG. 3, the fixed-beds 23 adjacent respectively to the weak fluidizing zones WF and the intense fluidizing zones SF are schematically shown as being straight and having constant widths. However, as described later, the widths of the upper surfaces of the fixed-beds 23 adjacent to the weak fluidizing zones WF are slightly larger than the ranges of the fixed-beds 23 adjacent to the intense fluidizing zones SF. The widths on the base plate surfaces of the fixed-beds 23 adjacent to the weak fluidizing zones WF may be larger than the widths on the base plate surfaces of the fixed-beds 23 adjacent to the intense fluidizing zones SF. In this manner, the distances of the fixed-beds 23 from the base plate ends in regions adjacent to the weak fluidizing zones WF where the wastes are dried and pyrolyzed are increased to widen the widths of the fixed-beds 23 in their regions adjacent to the weak fluidizing zones WF, so that the wastes are more slowly dried and pyrolyzed.

The fixed-beds 23 are formed on both end portions of the base plates 31, 31 and the base plates 32, 32 by closing the air diffusion nozzles 40 in the predetermined ranges y1, y2 from the both side walls 11b of the base plate 31,31 and the base plate sections 32, 32. The ranges y1 and y2 of the fixed-beds 23 can be set to any value ranging from 300 to 600 mm, and thus the area of the fluidized bed that is formed in the furnace bottom of the fluidized bed furnace can be adjusted depending on the amount of wastes to be treated. Specifically, if the amount of wastes to be treated is reduced, the fixed beds 23 are widened to reduce the area of the fluidized bed, thus reducing the amount of fluidizing air depending on the amount of wastes. When the plant capacity is excessively large for the amount of wastes, the fluidized bed furnace has to be frequently shut down to meet the amount of accepted wastes, and hence extra electric power and fuel for increasing the temperature need to be consumed for starting up and shutting down the fluidized bed furnace. However, since the area of the fluidized bed is reduced, a requisite minimum amount of fluidizing air is used to minimize the consumption of power so as to meet the amount of wastes, so that the fluidized bed furnace can continuously be operated.

In the swirling-flow-type fluidized bed furnace, the deflectors (comprising the slanted portions 11S1 shown in FIG. 1) for allowing the fluidized medium to turn easily from upper portions of the fluidized-beds 22 into upper portions of the moving-beds 21 are provided. In this case, the fluidized medium is scattered from the fluidized-beds 22 also to upper portions of the fixed-beds 23 formed adjacent to the moving-beds 21. Since the upper surface of the fluidized bed 20 has its area reduced by constriction due to the deflectors, air bubbles on the surface of the fluidized bed 20 burst relatively actively also in the upper portions of the moving-beds 21. Consequently, the fluidized medium flies together with the object to be treated onto the upper portions of the fixed-beds 23 formed adjacent to the moving-beds 21, so that the object to be treated is slowly dried and gasified by a mild tumbling action.

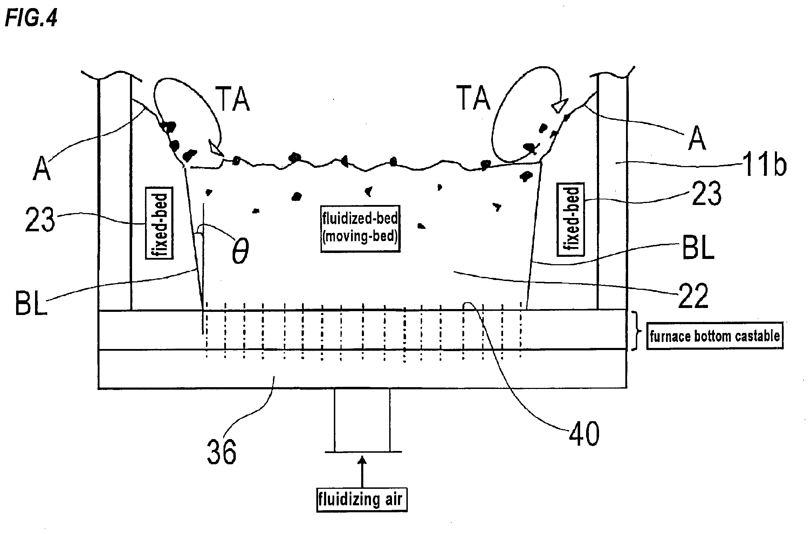

Next, the fixed-beds 23 formed in the fluidized bed 20 will be described with reference to FIG. 4.

FIG. 4 is a cross-sectional view of the fluidized bed 20 taken along line IV - IV of FIG. 3. As shown in FIG. 4, the angle (θ) of boundary lines BL between the fixed-beds 23 and the fluidized-bed 22 that are formed in the fluidized bed 20 is in the range of about a few degrees to 15°, though the angle increases as the amount of fluidizing air increases. Therefore, the widths of the upper surfaces of the fixed-beds adjacent to the weak fluidizing zones WF are slightly greater than the ranges of the fixed-beds adjacent to the intense fluidizing zones SF. Further, the boundary lines BL are not fixed, but fluctuate due to fluctuation of the in-bed diffusion of the fluidizing air. Consequently, incombustibles do not remain stagnant on the boundary lines BL, and hence do not start being accumulated at the boundary lines BL. In regions (A in FIG. 4) above points where the fixed-beds 23 intersect the upper surface of the fluidized-bed 22, the fluidized medium scattered from the fluidized-bed 22 due to a splashing action of the fluidized medium of the fluidized-bed 22 is supplied onto the fixed-beds 23. The fluidized medium that is supplied onto the fixed-beds 23 forms a certain slope and slides down, thus forming a so-called angle of repose. The fluidized medium is sprinkled onto the upper surfaces of the fixed-beds 23 and slides down along the slope, i.e., performing a so-called tumbling action. Due to repeated tumbling actions, the incombustibles also slide down from the upper surfaces of the fixed-beds 23 into the fluidized-bed 22, and hence are not accumulated on the upper surfaces of the fixed-beds 23. While the object to be treated (wastes) including the incombustibles performs the tumbling action in the same manner as the movement of the fluidized medium as indicated by TA in FIG. 4, the wastes are slowly dried and pyrolyzed.

In this manner, by forming the fixed-beds 23 having the inclined surfaces adjacent to the fluidized-bed 22, the object to be treated performs the same tumbling action as the fluidized medium. If the inclined surfaces are provided by walls that have a steep slant, then the object to be treated does not stay on the inclined surfaces, but slides down instantaneously into the fluidized-bed 22, so that the inclined surfaces do not exert any effect. Conversely, if the inclined surfaces are provided by walls that have a mild slant, then the object to be treated stays on the inclined surfaces, thus causing the incombustibles to start being accumulated thereon. Although the angle of repose at which the inclined surfaces are formed varies depending on the particle diameter, shape, density, or the like of the fluidized medium, the inclined surfaces are automatically formed depending on the properties of the fluidized medium by allowing the fluidized medium to form the fixed-beds.

Further, it is necessary for the fluidized medium to form the inclined surfaces at the angle of repose in the regions (A in FIG. 4) above the points where the fixed-beds 23 intersect the upper surface of the fluidized-bed 22. The void ratio (the proportion of air bubbles) of the fluidized-bed 22 changes depending on the amount of fluidizing air supplied to the fluidized-bed 22, thus causing the position of the upper surface of the fluidized-bed 22 to vary vertically. The inclined surfaces are automatically formed at locations higher than the upper surface of the fluidized-bed 22 by allowing the fluidized medium to form the fixed-beds.

It is important that the inclined surfaces of the upper portions of the fixed-beds are formed by the fluidized medium at locations higher than the upper surface of the fluidized-bed 22, and the inclined surfaces are slowly renewed at all times due to the tumbling actions of the fluidized medium. Thus, the inclined surfaces cannot be replaced with fixed walls.

As shown in FIG. 4, the fluidized bed furnace of the present invention has the fluidized-bed 22 and the fixed-beds 23 that are simultaneously formed, and drying and pyrolysis zones of the object to be treated (wastes) that are formed in the upper portions of the fixed-beds 23, wherein the fluidized medium flying onto the fixed-beds 23 supplies heat required to dry and pyrolyze the object to be treated, thereby slowly drying and pyrolyzing the object to be treated, and the fluidized-bed 22 is used as a combustion zone of pyrolysis residue, thereby combusting combustibles reliably.

Further, the temperature of the fluidized bed is controlled by regulating the amount of pouring water supplied to the furnace bed besides the amount of fluidizing air so that the moving-bed 21 has a temperature of 450 to 600°C and the fluidized-bed 22 has a temperature of 550 to 650°C. If a furnace bed thermometer for detecting the temperature of the fluidized bed 20 is to be inserted from a side wall of the furnace body 10, then a temperature detecting element should be inserted to a depth ranging from 50 to 150 mm from the fixed-bed 23 into the fluidized bed, and should be installed 300 mm or more above the base plate and 100 mm or more below the upper surface of the sand bed at a stationary time.

One of the characteristics of the fluidized bed furnace is that start-and-stop of the fluidized bed furnace is easy. Especially, when the temperature of the furnace bed is maintained at about 500°C or higher, the fluidized bed furnace can be started up by fluidizing the fluidized medium and supplying the wastes. According to the present invention, the fixed-bed 23 is formed by the fluidized medium between the furnace bed, which is fluidized, and the furnace wall, and the fixed-bed 23 acts as a protective layer for the temperature of the fluidized bed to prevent the temperature of the furnace bed from being lowered at the time of shutdown. As a result, even if the fluidized bed 20 is operated at a relatively low temperature in such a state that the temperature of the moving-bed 21 is in the range of 450 to 600°C and the temperature of the fluidized-bed 22 is in the range of 550 to 650°C, the restart after the shutdown can easily be performed and the amount of an assistive fuel required for the restart can greatly be reduced.

According to the embodiment shown in FIGS. 1 through 4, the fixed-beds 23 by the fluidized medium are formed on the base plate 30. However, walls which project inwardly from the side walls 11b of the furnace may be formed at a position above the base plate 30 and below the upper surface of the fluidized-bed, and the fluidized medium may be accumulated on the projecting walls by using a splashing action of the fluidized medium of the fluidized-bed, thereby forming fixed-beds.

According to the embodiment shown in FIGS. 1 through 3, the space below the base plate 30 is divided into the four air chambers 35, 35, 36, 36 by the partition plates 34. However, the partition plates 34 may be omitted, and the space may be used as a single air chamber. In such a case, the number of air diffusion nozzles per unit area may be different in each region. Further, the air chambers 35, 36 may be further divided.

Next, operation of the fluidized bed furnace 1 constructed as shown in FIGS. 1 through 4 will be described. The wastes as the object to be treated by the fluidized bed furnace 1 are typically expected to be materials which are non-uniform in quality and quantity and are liable to be combusted unstably, such as municipal wastes, sludge, wood debris, etc. According to the present embodiment, the wastes will be described as municipal wastes. The wastes are generally composed of water content, combustible content, and ash content (including incombustibles). In a thermal reaction, the water content is evaporated, and the combustible content is partly volatilized as a combustible gas (pyrolysis gas) to become pyrolysis residue. Materials that are left after water content is evaporated and a combustible gas is volatilized from the wastes, i.e., an unburned matter (char) and incombustibles, are the pyrolysis residue. It is preferable that the unburned matter (char) in the pyrolysis residue is separated from the incombustibles in the fluidized-bed 22, and part of the unburned matter (char) is combusted in the fluidized-bed 22 and delivered as a combustion gas and minute unburned matter (char) together with the fluidizing air into the freeboard 17.

The wastes are supplied from the supply port 15 to the moving-beds 21. At this time, the opening degrees of the regulating valves V1-1, V1-2, V2-1, V2-2 are adjusted to regulate the flow rates of the fluidizing air supplied to the moving-beds 21 and the fluidized-beds 22. The mass flow rate of the fluidizing air supplied to the moving-bed 21 is adjusted to be smaller than the mass flow rate of the fluidizing air supplied to the fluidized-bed 22. In the present embodiment, the mass flow rate of the fluidizing air supplied to the moving-bed 21 is adjusted in the range of 0.5 to 1.5 Gmf, whereas the mass flow rate of the fluidizing air supplied to the fluidized-bed 22 is adjusted in the range of about 1.5 to 5 Gmf. The mass flow rate at the time of starting fluidization of the fluidized medium is 1 Gmf.

A part of the wastes which have been supplied to the moving-bed 21 are supplied, together with the fluidized medium scattering from the fluidized bed by a splashing action of the fluidized medium of the fluidized bed, onto the fixed-bed 23. The wastes supplied onto the upper surface of the fixed-bed 23 slides down along the inclined surface together with the fluidized medium of the upper surface of the fixed-bed, i.e., a so-called tumbling action is performed, and thus drying and pyrolysis of the wastes proceeds slowly. The wastes which have not been splashed by the fluidized medium are swallowed into the moving-bed 21 and move downwardly together with the fluidized medium. At this time, the wastes are dried and pyrolyzed by the heat of the fluidized medium, and water content in the wastes is evaporated and a combustible gas is generated from the combustible content in the wastes, thus becoming a brittle pyrolysis residue. The pyrolysis residue typically contains the incombustibles and the unburned matter (char) which becomes brittle by the pyrolysis. When the pyrolysis residue that is generated in the moving-bed 21 moves with the fluidized medium and reaches the base plate 30, the pyrolysis residue is directed along the slanted base plate 30 toward the fluidized-bed 22. When the pyrolysis residue reaches the fluidized-bed 22, the pyrolysis residue contacts the fluidized medium which is fluidized intensely and the unburned matter (char) is separated from the incombustibles, and the remaining incombustibles from which the unburned matter (char) has been separated is directed together with part of the fluidized medium toward the incombustible discharge port 18. The incombustibles flow together with part of the fluidized medium into the incombustible discharge port 18, and are then discharged outside the fluidized bed furnace 1. The discharged incombustibles are collected in an unoxidized state and with no unburned matter (char) being attached in an incombustible separator (not shown). The fluidized medium from which the incombustibles have been separated by the incombustible separator (not shown) is returned into the furnace body 10 by a fluidized medium circulator (not shown).

On the other hand, the unburned matter which has been separated from the incombustibles in the fluidized-bed 22 moves upwardly together with the fluidized medium which is fluidized by supplying the fluidizing air. At this time, the unburned matter is combusted by the supplied fluidizing air to heat the fluidized medium and to generate a combustion gas, thus becoming an unburned matter and ash particles that are fine enough to be carried by the gas. Further, part of wastes which have not been pyrolyzed, and remain are also pyrolyzed. In the fluidized-bed 22, since the temperature of the fluidized medium gradually rises by combustion of the unburned matter, the temperature of the fluidized-bed 22 increases proportionally from the lower part to the upper part. Then, part of the unburned matter is supplied together with the fluidized medium onto the upper surface of the fixed-bed 23 by the splashing action of the fluidized medium in the upper part of the fluidized-bed 22, and the remaining unburned matter is supplied onto the upper surface of the moving-bed and swallowed again into the moving-bed. The unburned matter supplied onto the upper surface of the fixed-bed 23 slides down along the inclined surface of the upper surface of the fixed-bed 23 together with part of the wastes, i.e., a so-called tumbling action is performed, and thus drying and pyrolysis of the unburned matter proceeds slowly. Since the deflector (comprising the slanted portion 11S1 shown in FIG. 1) which facilitates the reversal of the fluidized medium from the upper portion of the fluidized-bed 22 to the upper portion of the moving-bed 21 is provided, the fluidized medium is scattered from the fluidized-bed 22 also to the upper portion of the fixed-bed 23 formed adjacent to the moving-bed 21. Further, since the upper surface of the fluidized bed 20 has a reduced area due to contraction by the deflector, explosive fracture of air bubbles on the surface of the fluidized bed 20 occurs relatively actively also in the upper portion of the moving-bed 21. From these, the fluidized medium also flies together with part of the wastes and the unburned matter onto the upper portion of the fixed-bed 23 formed adjacent to the moving-bed 21, and drying and gasification of part of the wastes and the unburned matter proceeds slowly over time by the mild tumbling action. The fluidized medium that has flowed into the moving-bed 21 accepts the supplied wastes again, and repeats the above thermal reactions in the moving-bed 21 and the fluidized-bed 22.

The wastes such as municipal wastes are difficult to combust stably because they vary in terms of calorific values. If the wastes that are introduced into the fluidized bed furnace 1 per unit time are not stable in quality and quantity, then the amount of water vapor due to drying and the amounts of a combustible gas and a combustion gas that are produced due to the pyrolysis fluctuate, resulting in variations in the pressure in the fluidized bed furnace 1. Thus, the fluidized bed furnace 1 becomes difficult to operate stably. In order to suppress fluctuations in the amounts of the water vapor, the combustible gas, and the like that are produced, it is preferable to dry and pyrolyze the wastes in the fluidized bed 20 as slowly as possible.

According to the present invention, the fluidized-bed 22 and the fixed-bed 23 are concurrently formed and the drying and pyrolysis zone of the object to be treated (wastes) is formed in the upper part of the fixed-bed 23, and heat supply required for drying and pyrolysis is performed by the fluidized medium which flies onto the upper part of the fixed-bed 23. Thus, drying and pyrolysis of the object to be treated (wastes) is carried out slowly, and combustion of the combustibles can be carried out reliably in the fluidized-bed 22 serving as a combustion zone of the pyrolysis residue.

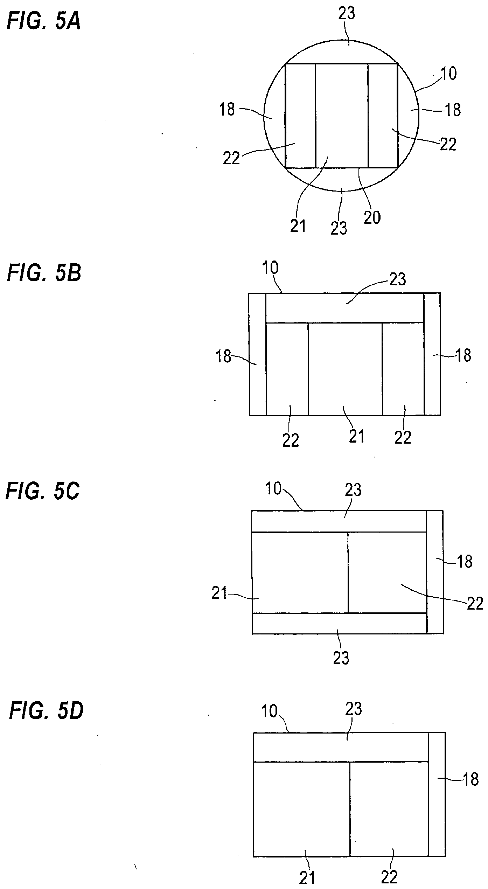

FIGS. 5A, 5B, 5C, and 5D are schematic plan views showing fluidized bed furnaces according to various embodiments of the present invention.

FIG. 5A shows a swirling-flow-type fluidized bed furnace having a rectangular fluidized bed 20 disposed in a cylindrical furnace body 10. As shown in FIG. 5A, a moving-bed 21 is formed centrally in the cylindrical furnace body 10, and fluidized-beds 22, 22 are formed on both sides of the moving-bed 21. Fixed-beds 23, 23 are formed on both sides of the moving-bed 21 and the fluidized-beds 22. Incombustible discharge ports 18 are formed outside of the fluidized-beds 22, 22. Since the furnace body of the fluidized bed furnace according to the present embodiment has a cylindrical shape, the furnace body is the simplest in structure and can easily be manufactured. As the furnace wall has a cylindrical shape, durability of a refractory material is improved. A thermal reaction occurs in the fluidized bed 20 in the same manner as with the fluidized bed furnace shown in FIG. 3.

FIG. 5B shows a swirling-flow-type fluidized bed furnace which has a fluidized bed 20 having a fixed-bed 23 formed on one side of a moving-bed 21 and fluidized-beds 22. As shown in FIG. 5B, the moving-bed 21 is formed centrally in a furnace body 10, and the fluidized-beds 22, 22 are formed on both sides of the moving-bed 21. The fixed-bed 23 is formed on one side of the moving-bed 21 and the fluidized-beds 22. Further, incombustible discharge ports 18 are formed outside of the fluidized-beds 22, 22. A thermal reaction occurs in the moving-bed 21, the fluidized-beds 22, and the fixed-bed 23 in the same manner as with the fluidized bed furnace shown in FIG. 3.

FIGS. 5C and 5D show examples wherein a fixed-bed 23 or fixed-beds 23 are formed in a one-sided swirling-flow-type fluidized bed furnace. In the example shown in FIG. 5C, a single moving-bed 21 and a single fluidized-bed 22 are formed in a furnace body 10, and fixed-beds 23 are formed on both sides of the moving-bed 21 and the fluidized-bed 22. Further, an incombustible discharge port 18 is formed outside of the fluidized-bed 22. A thermal reaction occurs in the moving-bed 21, the fluidized-bed 22, and the fixed-beds 23 in the same manner as with the fluidized bed furnace shown in FIG. 3.

In the example shown in FIG. 5D, a single moving-bed 21 and a single fluidized-bed 22 are formed in a furnace body 10, and a fixed-bed 23 is formed on one side of the moving-bed 21 and the fluidized-bed 22. Further, an incombustible discharge port 18 is formed outside of the fluidized-bed 22. A thermal reaction occurs in the moving-bed 21, the fluidized-bed 22, and the fixed-bed 23 in the same manner as with the fluidized bed furnace shown in FIG. 3.

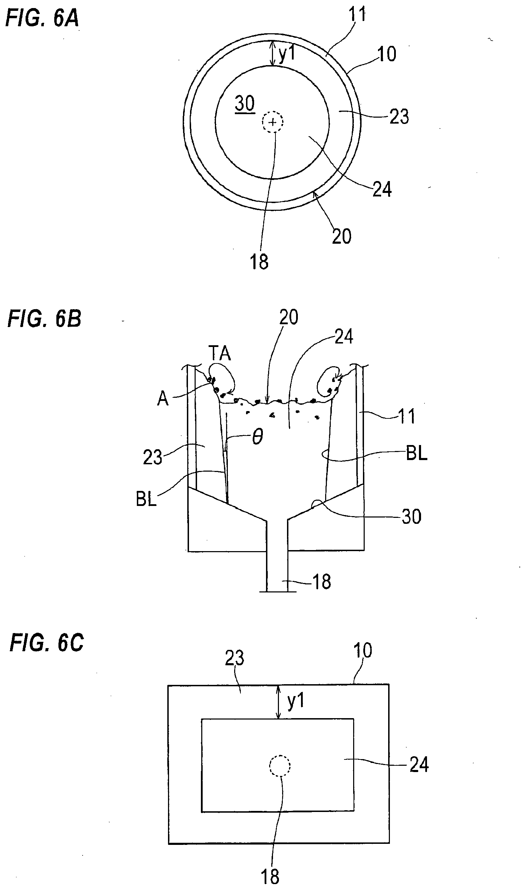

FIGS. 6A and 6B show an example wherein a fixed-bed 23 is formed in a bubbling-type fluidized bed furnace. FIG. 6A is a schematic plan view, and FIG. 6B is a schematic vertical cross-sectional view.

In the example shown in FIGS. 6A and 6B, an incombustible discharge port 18 is disposed centrally in a cylindrical furnace body 10. A base plate 30 on the bottom of the furnace body 10 has a generally inverted conical shape (mortar shape) disposed around the incombustible discharge port 18. The base plate 30 has a number of air diffusion nozzles (not shown) for ejecting fluidizing air as a fluidizing gas into the furnace. The air diffusion nozzles are configured to eject uniform amounts of fluidizing air. The air diffusion nozzles which are positioned within a predetermined range y1 from a cylindrical furnace wall 11 are closed so as not to supply fluidizing air therefrom into the furnace. Therefore, a fixed-bed 23 where the fluidized medium is kept in a resting state is formed in an annular region within the range y1 from the furnace wall 11. Thus, in the furnace, a fluidized bed 20 which comprises a bubbling fluidized-bed 24 having a circular cross section disposed around the incombustible discharge port 18 and a fixed-bed 23 having a substantially annular cross section disposed around the bubbling fluidized-bed 24 is formed. The air diffusion nozzles which are positioned within the predetermined range y1 from the furnace wall 11 may not be closed, but may be adjusted to reduce the diameters of the holes of the nozzles to supply a small amount of air into the furnace within the range to maintain a so-called fixed-bed where the fluidized medium is not moved or fluidized, thereby forming the fixed-bed 23.

As shown in FIG. 6B, the angle (θ) of boundary lines BL between the fixed-bed 23 and the bubbling fluidized-bed 24 that are formed in the fluidized bed 20 varies depending on the shape of the fluidized medium and the amount of fluidizing air. The angle (θ) of boundary lines BL is in the range of about a few degrees to 15°, though it increases as the amount of fluidizing air increases. The boundary lines BL are not fixed, but fluctuate due to the fluctuation of the in-bed diffusion of the fluidizing air. Consequently, the incombustibles do not remain stagnant on the boundary lines BL, and hence do not start being accumulated at the boundary lines BL. In a region (A in FIG. 6B) above a point where the fixed-bed 23 intersects the upper surface of the bubbling fluidized-bed 24, the fluidized medium scattered from the bubbling fluidized-bed 24 due to a splashing action of the fluidized medium of the bubbling fluidized-bed 24 is supplied onto the fixed-bed 23. The fluidized medium that has been supplied onto the fixed-bed 23 forms a certain slope and slides down, thus forming a so-called angle of repose. The fluidized medium is sprinkled onto the upper surface of the fixed-bed 23 and slides down along the slope, i.e., performing a so-called tumbling action. Due to the repeated tumbling actions, the incombustibles also slide down from the upper surface of the fixed-bed 23 into the bubbling fluidized-bed 24, and hence are not accumulated on the upper surface of the fixed-bed 23. While the object to be treated (wastes) including the incombustibles performs the tumbling action in the same manner as the movement of the fluidized medium as indicated by TA in FIG. 6B, drying and pyrolysis of the wastes proceeds slowly. The slope (so-called angle of repose) formed in the upper portion of the fixed-bed varies depending on the particle diameter of the fluidized medium and the shape of the fluidized medium. In the fluidized bed furnace, part of the fluidized medium is replaced with ash composed mainly of silicon contained in the object to be treated, and the angle of repose also changes. According to the present invention, since the slope is formed by the fluidized medium in the upper portion of the fixed-bed, the angle of repose is automatically adjusted depending on the properties (particle diameter, shape, etc.) of the fluidized medium, thus enabling the tumbling action to continue.

The inclined surface needs to be formed by the fluidized medium at the angle of repose in the region (A in FIG. 6B) above the point where the fixed-bed 23 intersects the upper surface of the fluidized-bed 24. The void ratio (the proportion of air bubbles) of the fluidized-bed 24 changes depending on the amount of fluidizing air supplied to the fluidized-bed 24, causing the position of the upper surface of the fluidized-bed 24 to vary vertically. However, the inclined surface is automatically formed at a position above the upper surface of the fluidized-bed 24 by allowing the fluidized medium to form the fixed-bed.

FIG. 6C is a schematic plan view showing an example wherein a fixed-bed 23 is formed in a rectangular bubbling-type fluidized bed furnace. In the example shown in FIG. 6C, an incombustible discharge port 18 is formed centrally in a rectangular furnace body 10, and a fixed-bed 23 with a fluidized medium kept in a resting state is formed in a region within a range y1 from an inner wall of the furnace body 10. A bubbling fluidized-bed 24 having a substantially rectangular cross section is formed inwardly of the fixed-bed 23. A thermal reaction occurs in the fixed-bed 23 and the bubbling fluidized-bed 24 in the same manner as with the fluidized bed furnace shown in FIGS. 6A and 6B.

Although the embodiments of the present invention have been described above, the present invention is not limited to the above embodiments, but may be reduced to practice in various different configurations within the scope of the technical concept thereof.

### Industrial Applicability

The present invention is applicable to a fluidized bed furnace and a method for treating wastes using such fluidized bed furnace which are capable of treating wastes continuously and stably even if the wastes vary in quality and quantity, by drying and pyrolyzing the wastes slowly.

### Reference Signs List

- 1: fluidized bed furnace
- 10: furnace body
- 11a: side wall
- 11b: side wall
- 11S1, 11S2: slanted portion
- 15: supply port
- 16: exhaust port
- 17: freeboard
- 18: incombustible discharge port
- 20: fluidized bed
- 21: moving-bed
- 22: fluidized-bed
- 23: fixed-bed
- 24: bubbling fluidized-bed
- 30, 31, 32: base plate
- 33: bottom plate
- 34: partition plate
- 35, 36: air chamber
- 40: air diffusion nozzle
- 51A, 51B, 52A, 52B: air pipe
- 55: air pipe
- 56: air blower
- V1-1, V1-2, V2-1, V2-2: regulating valve

## Claims

1. A fluidized bed furnace for treating wastes comprising:
a furnace body (10) whose horizontal section is substantially rectangular or circular;
a base plate (30) disposed at a bottom portion of said furnace body and having gas supply ports (40) for supplying a fluidizing gas to fluidize a fluidized medium; and
a fluidized bed (20) formed on said base plate (30) in said furnace body (10) to take the wastes into the fluidized medium and pyrolyze the wastes;
wherein a supply amount of the fluidizing gas ejected from said gas supply ports of said base plate (30) is differentiated in areas of said fluidized bed (20) to make a fluidizing velocity larger in at least one area of said areas than in another area so that a moving-bed zone (21) where the fluidized medium descends is formed in said another area and a fluidized-bed zone (22) where the fluidized medium ascends is formed in said at least one area, and wherein the fluidized bed furnace is configured such that the wastes are supplied into said moving-bed;
said fluidized bed (20) has a fixed-bed (23) where the fluidized medium is kept in a resting state, said fixed-bed (23) being formed at a furnace wall side of said furnace body (10);
said moving-bed zone (21) and said fluidized-bed zone (22) are located away from said furnace wall of said furnace body (10) and adjacent to said fixed-bed (23); and
an upper surface of said fixed-bed (23) is formed by an inclined surface formed by the fluidized medium which has been scattered from said fluidized-bed zone (22).

2. A fluidized bed furnace according to claim 1, wherein said fixed-bed (23) is formed without supplying the fluidizing gas or is formed by supplying the fluidizing gas within a range for allowing the fluidized medium to form a fixed-bed (23).

3. A fluidized bed furnace according to claim 1, wherein a circulating flow for circulating the fluidized medium between said moving-bed zone (21) and said fluidized-bed zone (22) is formed in said at least one area and said another area.

4. A fluidized bed furnace according to claim 1, wherein said fixed-bed (23) is formed on one side of said moving-bed zone (21) and said fluidized-bed zone (22) or is formed on both sides of said moving-bed zone (21) and said fluidized-bed zone (22).

5. A treating method for treating wastes comprising:
differentiating an amount of a fluidizing gas supplied to a fluidized bed (20) in areas of said fluidized bed to make a fluidizing velocity larger in at least one area of said areas than in another area so that a moving-bed zone (21) where the fluidized medium descends is formed in said another area and a fluidized-bed zone (22) where the fluidized medium ascends is formed in said at least one area;
forming a fixed-bed (23) where the fluidized medium is kept in a resting state, said fixed-bed (23) being located adjacent to said moving-bed zone (21) and said fluidized-bed zone (22);
supplying the wastes into said moving-bed zone (21); and
repeating a tumbling action to cause the wastes to slide down together with the fluidized medium along a certain inclination formed by the fluidized medium at an upper portion of said fixed-bed (23) and to supply the wastes onto the upper portion of said fixed-bed (23) again by a splashing effect of the fluidized medium, thereby drying and pyrolyzing the wastes slowly.

## Patentansprüche

1. Wirbelbettofen zum Behandeln von Abfällen, welcher Folgendes aufweist:
einen Ofenkörper (10), dessen horizontaler Querschnitt im Wesentlichen rechteckig oder kreisförmig ist;
eine Basisplatte (30), die an einem unteren Teil des Ofenkörpers angeordnet ist und Gaslieferanschlüsse (40) hat, um Wirbelgas zu liefern, um ein Wirbelmedium zu fluidisieren bzw. durchzuwirbeln; und
ein Wirbelbett (20), das auf der Basisplatte (30) in dem Ofenkörper (10) gebildet wird, um die Abfälle in das Wirbelmedium aufzunehmen und die Abfälle zu pyrolisieren;
wobei eine Liefermenge des Wirbelgases, welches aus den Gaslieferanschlüssen der Basisplatte (30) ausgestoßen wird, in Bereichen des Wirbelbettes (20) unterschiedlich gemacht wird, um eine Wirbelgeschwindigkeit hervorzurufen, die in mindestens einem Bereich der Bereiche größer ist als in einem anderen Bereich, so dass eine Zone (21) mit sich bewegendem Bett, wo das Wirbelmedium absteigt, in dem anderen Bereich gebildet wird, und eine Zone (22) mit fluidisiertem Bett bzw. Wirbelbett, wo das Wirbelmedium aufsteigt, in dem mindestens einen Bereich gebildet wird, und wobei der Wirbelbettofen so konfiguriert ist, dass die Abfälle in das sich bewegende Bett bzw. Wirbelbett geliefert werden;
wobei das Wirbelbett (20) ein ruhendes Bett (23) hat, wo das Wirbelmedium in einem ruhenden Zustand gehalten wird, wobei das ruhende Bett (23) an einer Ofenwandseite des Ofenkörpers (10) gebildet wird;
wobei die Zone (21) mit sich bewegendem Bett und die Zone (22) mit Wirbelbett entfernt von der Ofenwand des Ofenkörpers (10) und benachbart zu dem ruhenden Bett (23) angeordnet sind; und
wobei eine Oberseite des ruhenden Bettes (23) durch eine geneigte Oberfläche geformt wird, die durch das Wirbelmedium geformt wird, welches aus der Zone (22) mit Wirbelbett gestreut worden ist.

2. Wirbelbettofen nach Anspruch 1, wobei das ruhende Bett (23) gebildet wird, ohne das Wirbelgas zu liefern, oder geformt wird, indem das Wirbelgas in einen Bereich geliefert wird, um zu gestatten, dass das Wirbelmedium ein ruhendes Bett (23) bildet.

3. Wirbelbettofen nach Anspruch 1, wobei ein zirkulierender Fluss zum Zirkulieren des Wirbelmediums zwischen der Zone (21) mit sich bewegendem Bett und der Zone (22) mit Wirbelbett in dem mindestens einen Bereich und dem anderen Bereich gebildet wird.

4. Wirbelbettofen nach Anspruch 1, wobei das ruhende Bett (23) an einer Seite der Zone (21) mit sich bewegendem Bett und der Zone (22) mit Wirbelbett gebildet wird oder an beiden Seiten der Zone (21) mit sich bewegendem Bett und der Zone (22) mit Wirbelbett gebildet wird.

5. Verfahren zur Behandlung von Abfällen, welches Folgendes aufweist:
Unterteilen einer Menge eines Wirbelgases, die zu einem Wirbelbett (20) geliefert wird in Bereiche des Wirbelbettes, um eine Fluidisierungs- bzw. Wirbelgeschwindigkeit in mindestens einem Bereich der Bereiche größer zu machen als in einem anderen Bereich, so dass eine Zone (21) mit sich bewegendem Bett, wo das Wirbelmedium absteigt, in dem anderen Bereich gebildet wird, und eine Zone (22) mit Wirbelbett, wo das Wirbelmedium aufsteigt, in dem mindestens einen Bereich gebildet wird;
Formen eines ruhenden Bettes (23), wo das Wirbelmedium in einem ruhenden Zustand gehalten wird, wobei das ruhende Bett (23) benachbart zu der Zone (21) mit sich bewegendem Bett und der Zone (22) mit Wirbelbett angeordnet ist;
Liefern der Abfälle in die Zone (21) mit sich bewegendem Bett; und
Wiederholen eines Umwälzungsvorgangs, um zu bewirken, dass die Abfälle zusammen mit dem Wirbelmedium entlang einer gewissen Neigung, die durch das Wirbelmedium an einem oberen Teil des ruhende Bettes (23) gebildet wird, heruntergleiten, und um die Abfälle durch einen Spritzeffekt des Wirbelmediums wieder zu einem oberen Teil des ruhenden Bettes (23) zu liefern, wodurch die Abfälle langsam getrocknet und pyrolisiert werden.

## Revendications

1. Four à lit fluidisé pour le traitement de déchets comprenant :
un corps de four (10) dont une section horizontale est sensiblement rectangulaire ou circulaire ;
une plaque de base (30) disposée dans une portion inférieure dudit corps de four et ayant des orifices d'alimentation en gaz (40) pour fournir un gaz de fluidisation afin de fluidifier un milieu fluidisé ; et
un lit fluidisé (20) formé sur ladite plaque de base (30) dans ledit corps de four (10) pour amener les déchets dans le milieu fluidisé et pyrolyser les déchets ;
dans lequel une quantité d'alimentation du gaz de fluidification éjecté depuis lesdits orifices d'alimentation en gaz de ladite plaque de base (30) est différenciée dans des zones dudit lit fluidisé (20) pour obtenir une vitesse de fluidification plus grande dans au moins une zone desdites zones que dans une autre zone, de sorte qu'une zone de lit mobile (21), où le milieu fluidisé descend, est formée dans ladite autre zone, et qu'une zone de lit fluidisé (22), où le milieu fluidisé monte, est formée dans ladite au moins une zone, et le four à lit fluidisé étant configuré de sorte que les déchets soient introduits dans ledit lit mobile ;
ledit lit fluidisé (20) ayant un lit fixe (23) dans lequel le milieu fluidisé est maintenu dans un état de repos, ledit lit fixe (23) étant formé au niveau d'un côté d'une paroi dudit corps de four (10) ;
ladite zone de lit mobile (21) et ladite zone de lit fluidisé (22) étant situées à l'écart de ladite paroi dudit corps de four (10) et étant adjacente audit lit fixe (23) ; et
une surface supérieure dudit lit fixe (23) étant formée par une surface inclinée formée par le milieu fluidisé qui a été dispersé depuis ladite zone de lit fluidisé (22).

2. Four à lit fluidisé selon la revendication 1, dans lequel ledit lit fixe (23) est formé sans alimenter le gaz de fluidisation ou est formé en alimentant le gaz de fluidification dans une plage permettant au milieu fluidisé de former un lit fixe (23).

3. Four à lit fluidisé selon la revendication 1, dans lequel un flux de circulation pour faire circuler le milieu fluidisé entre ladite zone de lit mobile (21) et ladite zone de lit fluidisé (22) est formé dans ladite au moins une zone et ladite autre zone.

4. Four à lit fluidisé selon la revendication 1, dans lequel ledit lit fixe (23) est formé sur un côté de ladite zone de lit mobile (21) et de ladite zone de lit fluidisé (22) ou est formé sur les deux côtés de ladite zone de lit mobile (21) et de ladite zone de lit fluidisé (22).

5. Procédé de traitement pour le traitement de déchets comprenant les étapes consistant à :
différencier une quantité d'alimentation en gaz de fluidification fournie à un lit fluidisé (20) dans des zones dudit lit fluidisé pour obtenir une vitesse de fluidification plus grande dans au moins une zone desdites zones que dans une autre zone, de sorte qu'une zone de lit mobile (21), où le milieu fluidisé descend, est formée dans ladite autre zone et qu'une zone de lit fluidisé (22), où le milieu fluidisé monte, est formée dans ladite au moins une zone ;
former un lit fixe (23) dans lequel le milieu fluidisé est maintenu dans un état de repos, ledit lit fixe (23) étant situé adjacent à ladite zone de lit mobile (21) et de ladite zone lit fluidisé (22) ;
introduire les déchets dans ladite zone de lit mobile (21) ; et
répéter une action de remuage pour faire glisser les déchets avec le milieu fluidisé vers le bas le long d'une certaine inclinaison formée par le milieu fluidisé au niveau de la portion supérieure dudit lit fixe (23) et faire revenir les déchets dans la portion supérieure dudit lit fixe (23) par effet de d'éclaboussure du milieu fluidisé, séchant et pyrolysant ainsi lentement les déchets.
